# EUROPEAN PATENT SPECIFICATION

(11) **EP 1 667 355 B1**
(45) Date of publication and mention of the grant of the patent: **20.08.2008**
(21) Application number: 06002225.8
(22) Date of filing: 19.02.2002
(51) Int. Cl.: H04L 9/08, H04N 7/167, H04N 7/24, G06F 1/00

(54) **Encrypted media key management**
Verwaltung von verschlüsselten Medien-Schlüsseln
Gestion de clés de multimédia chiffrées

(30) Priority: 21.02.2001 US 269845 P
(43) Date of publication of application: 07.06.2006
(62) Divisional of application: 02701824.1
(73) Proprietor: RPK New Zealand Limited, Parnell, Auckland (NZ)
(72) Inventor: Raike, William Michael, Swanson Auckland (NZ); Donovan-Smith, Brian James, Glenfield Auckland (NZ); Higgins, Sean Joseph, Ellerslie Auckland 1051 (NZ); Martin, Patrick, John, Howick Auckland (NZ)
(74) Representative: Illingworth-Law, William Illingworth

(56) References cited:
- WO-A-00/27067
- WO-A-00/44119
- WO-A-00/59150
- WO-A-00/75787
- WO-A-99/12087
- US-A- 5 999 629

## Description

### TECHNICAL FIELD

This invention relates to the secure distribution of digitised audio-visual works using an encryption key management system.

### BACKGROUND ART

Audio-visual entertainment works are conventionally distributed direct to the consumer by audio or video CDS or by broadcasting or cablecasting. Subject to adequate bandwidth the Internet provides a viable alternative for the distribution of digitised audio-visual works. Among other things digital distribution via the internet provides a solution to the problems which have hitherto hindered the development of video on demand services.

Technology for digitising and playing digitised audio and video works is well known. Where the digitised works are distributed electronically through a data network such as the Internet the size of the files (even when compressed) and the bandwidth of the network mean that streaming techniques must be used if the consumer is to be able to commence listening or viewing within a reasonable period of requesting the work to be downloaded. An example of streaming software is Real Networks Inc's RealServer and RealPlayer.

One of the problems with making available digitised audio-visual works on the Internet is that pirated copies may easily be made and distributed thereby depriving producers and copyright owners of income. There is a need to ensure that audio-visual works can be played only by consumers who have paid for them.

To control unauthorised use of Internet-distributed audio and video works encryption systems have been proposed, but the management of the keys required for decryption to date is inconvenient, inefficient or inadequate.

WO-A-00/59150 describes an enforcement architecture and method for implementing digital rights management. Digital content is distributed from a content server. A digital licence that provides a right to render digital content can be requested from a licence server.

### DISCLOSURE OF THE INVENTION

It is therefore an object of the present invention to provide a method for the secure distribution of digitised audio-visual works over a data network.

Accordingly in one aspect the invention consists in a method for the secure distribution of digitised audio-visual works to consumers over a data network comprising the steps of:
encrypting said works using a different encryption key for each work,
storing the encrypted works on a first server,
storing the encryption keys on a second server,
making available a third server from which consumers may purchase the encryption keys,
the consumer causing a request to be made from a network-connected client device to said third server for a key for a desired work, at the third server, passing said request to the second server, at said second server verifying the allowability of fulfilling said request and if so encrypting the relevant encryption key and downloading it to said third server, said third server downloading said encryption key to said client device,
decrypting the encryption key at the client device and storing it in memory, generating a request to the first server from said client device to supply the desired work,
delivering the encrypted work from said first server to said client device, and
retrieving the encryption key from said memory and using it to decrypt the work to a condition where it is ready to play using appropriate player software.

The inventive concept may also be applied to the secure distribution of other digitised products over the Internet. Accordingly in a further aspect of the invention consists a method for the secure distribution of digitised products to consumers over a data network comprising the steps of:
encrypting said products using a different encryption key for each product,
storing the encrypted product on a first server,
storing the encryption keys on a second server,
creating steering files corresponding to each product and its corresponding key,
said steering files containing information identifying the product and the respective locations of the product and encryption key,
making available on a third server steering files corresponding to each product for consumers to purchase,
said steering files being sent and executed on a network-connected client computer device accessible to the consumer causing a request to be made to said second server for the key for the product identified in the steering file,
at the second server encrypting the relevant encryption key with a key unique to the consumer and downloading it to said client device,
decrypting the encryption key at said client device and storing it in memory,
generating a request to the first server from said client device to deliver the product identified in the steering file,
downloading the encrypted product from said first server to said client device,
retrieving the encryption key from said memory and using it to decrypt the product to a condition where it is ready for use.

Preferably a public key encryption system is used to encrypt the media key for downloading to the client device and to facilitate this the client device uploads to the second server the consumer's public key.

### BRIEF DESCRIPTION OF THE DRAWING

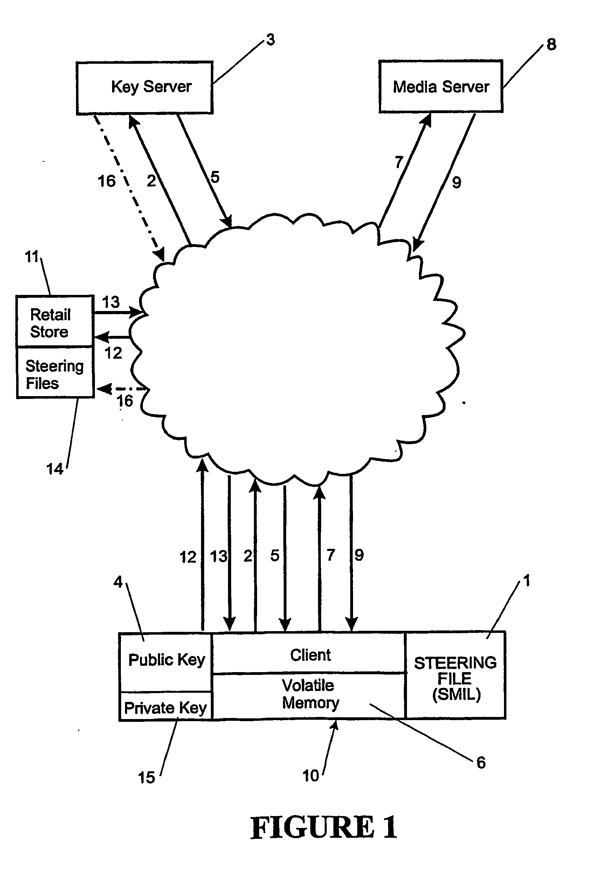

Figure 1 shows a diagrammatic representation of a key management system for encrypted digitised audio-visual works.

### BEST MODES FOR CARRYING OUT THE INVENTION

The present invention in particular, but not solely concerns the secure online delivery of content such as audio-visual works in streaming media form. The content is encrypted and a key management or rights management system established to ensure only authorised users can decrypt and play the content. It is part of the invention that the encrypted content is made available separately from the encryption keys or access rights and these rights or keys are purchased or otherwised acquired by consumers from an entity who holds neither media or keys. Additionally security is maximised if all three functions are managed by separate entities from separate server sites.

The present invention delivers media keys to consumers or end-users who wish to have access to encrypted media through the use of client devices consisting of either general purpose computers (eg "PCs") or special-purpose computing devices (eg "set-top boxes") equipped with decryption processing capability. The encrypted media may consist of streams or of files. In this case wherein it is intended to be able to deliver the media to more than one recipient, whether simultaneously (multicast) or separately on a per-recipient basis (unicast), or else by a file download mechanism, an encrypting entity will perform the encryption using a media key generated for this purpose, and it is this media key that is to be delivered only to authorised end users. In the event that a public-key algorithm is used to encrypt the media, the term "media key" in this context is intended to mean the private key or decryption key required to decrypt the media.

In the systems described here, the media key is delivered to end users by an agent or entity termed a "key server". Following encryption of the actual media by the encrypting entity, the media key is transmitted or delivered securely to the key server. The encrypting entity also transmits or delivers the encrypted media, using any ordinary means, to a "media server" whose role is to deliver the media to end users either by multicast or unicast streaming or by a file download mechanism. More than one media server may be employed by the content provider. To best secure the media it is important for the key server and media server to be managed by separate entities.

An example of currently available means by which media streams may be delivered from a media server to an end user is the RealServer and RealPlayer software produced by Real Networks Inc.

Referring to Figure 1 in one embodiment of the proposed system for delivering media keys "just in time" for their use, an end user will obtain from a retailer 11 (i.e. an Internet "store" or "shop") by making a request 12, a "steering file" 1 for the media work selected by the user which is downloaded 13 to the user. This file contains information needed by the user's software running on client device 10 to make two requests: one for the appropriate media key, and the other for the user selected encrypted media. The latter function may be omitted in some business models with the user obtaining encrypted media independently of and at a different time to obtaining the media key. The retail store 11 will have previously downloaded or updated 16 a database 14 containing sufficient media information to allow it to construct steering files for a content provider's media repertoire. These will be sold to end users using a variety of conventional online or partly online payment techniques.

An example of a suitable steering file format is a SMIL file, commonly used by RealPlayer to organise and synchronise multiple requests for media on remote servers. An example of a SMIL file for this purpose is:

```
  <smil><body><par><seq>
  <ref src="file://C:\EncryptMedia\MediaKey\clinton.mpeg.rk"h/>
  <ref src="file://C:\EncryptMedia\Encrypted\clinton.mpeg.em"/>
  </seq></par></body></smil>
```

The steering file may alternatively be implemented by a Media Delivery Metafile (MDM) of which the following is an example:

```
  <?xml version="1.0" ?>
  <MDM Version="1">
  <MediaInfo>
```

```
 <MEDIAURL>rtsp://Iocalhos/trpkencrypted/ac5e538e.rm</MEDIAURL>
            <NAME>Greatest Hits - Shining Like A National Guitar/Still crazy after
            all these years/Rock</NAME>
            <DESCRIPTION>0</DESCRIPTION>
            <AUTHOR>Paul Simon</AUTHOR>
            <COPYRIGHT></COPYRIGHT>
     </MediaInfo>
     <KEYSERVER>
            <KEYURL>rtsp://localhost/SecureKey/ac5e538e.rk</KEYURL>
     <KSPLK>RPK34KHAB22Sz6YOCV4LxM9kLvLNj7HFaCSwO8XBuKql
     YUUm25Vt5w5HNYOfZKqvabQ29
     EilPuTingVEMEHZEbq-EMImU2_Pk7sNcXTdHh1YQA</KSPLK>
     </KEYSERVER>
     </MDM>
```

The SMIL file first causes the user's software (eg RealPlayer) on the client device 10 to send an appropriate request 2 to a key server 3 for the media key corresponding to the media to which the SMIL file relates. The information needed to make this request includes the location of the key server 3 and information that allows the key server to determine which media key is being requested. The process by which this request is made will also include means by which the end user transmits its own public key 4 to the key server 3, and may include transmitting additional identifying or authentication information to the key server. It is preferred that the media key be encrypted using a public key algorithm and it is to facilitate this that the user's public key 4 is provided to the key server.

If the key server 3 verifies, by means external to the present system, that the end user is entitled to receive the requested media key, then the key server 3 encrypts the media key under the end user's public key and sends it 5 to the end user. The end user's software (eg a decrypting "plugin" for RealPlayer) will store the encrypted media key, preferably in volatile memory 6, or alternatively may immediately decrypt the media key with the end user's private key 15 and store the clear media key in volatile memory. The media key is intended to reside in volatile memory (eg RAM) to make it more secure than if it was stored on a hard drive and to prevent unauthorised repeat use if a pay per view business model is being applied.

Upon receipt of the encrypted media key, the steering file 1 then causes the user's software to request 7 a media server 8 to deliver the encrypted media. The media is downloaded 9 and when it arrives (the first encrypted packet in the case of streaming delivery, or the entire encrypted file in the case of download delivery), the media key is retrieved from volatile memory 6, asymmetrically decrypted as already described if it has been stored in encrypted form, and then used to decrypt the media so that it can be viewed or played or otherwise used.

In the embodiment just described the retail store 11 constructs, in response to user requests, steering files containing steering information, which may include entitlement information (eg unique electronic "tickets"), obtained in advance from the key server manager. However in another embodiment the retail store may not maintain a stock of such steering information and may instead obtain the information directly from the key server 3 each time it receives a request 2 from a user. The key server 3 could deliver the steering information to the retail store 11 for download to the user or alternatively download the steering information directly to the user client device 10. Verification procedures would still be carried out by the retail store 11 and the key server 3 to verify payment and entitlement respectively.

In a third embodiment efficiency gains could be achieved by modifying the second embodiment so that the user would receive a file containing steering information for the media server 8 but instead of steering information for the key server 3, would actually receive in this file an encrypted key. This could be downloaded direct by the key server 3 or via the retail store 11 for forwarding to the user. In such a scenario the steering file information would simply contain the location of the media server and an identifier for the encrypted media selected by the user. As in the first embodiment the user's software cannot play the encrypted media unless it also is in possession of the key associated with that media to allow it to be decrypted.

The advantages of the system described are:
(a) only authorised recipients have access to media keys;
(b) the business and functional responsibilities of managing keys are separated from the responsibilities for managing encrypted media;
(c) the media keys are delivered to end users "just in time" for them to be used to decrypt the media;
(d) media keys are not transmitted or stored anywhere other than at a trusted key server unless they have been encrypted under an authorised user's public key;
(e) the steps required for use of the system by an end user is very simple so that no special knowledge or skill regarding security or encryption techniques is required for end users to use the system.

## Claims

1. A method for the secure distribution of digitised audio-visual works to consumers over a data network comprising the steps of:
encrypting said works using a different encryption key for each work,
storing the encrypted works on a first server (8),
storing the encryption keys on a second server (3),
making available a third server (11) from which consumers may purchase encryption keys,
the consumer causing a request (12) to be made from a network-connected client computer device (10) to said third server for key for a desired work,
the third server passing said request to the second server,
at said second server verifying the allowability of fulfilling said request and if so encrypting the relevant encryption key with a key unique to the consumer and downloading it to said third server,
said third server downloading said encryption key to said client device,
decrypting the encryption key at said client device and storing it in memory (6),
generating a request to the first server from said client device to deliver the desired work,
delivering the encrypted work from said first server to said client device,
retrieving the encryption key from said memory and using it to decrypt the work to a condition where it is ready to play using appropriate player software.

2. A method for the secure distribution of digitised products to consumers over a data network comprising the steps of
encrypting said products using a different encryption key for each product,
storing the encrypted product on a first server (8),
storing the encryption keys on a second server (3),
creating steering files (1) corresponding to each product and its corresponding key,
said steering files containing information identifying the product and the location of the encryption key,
making available on a third server (11) steering files corresponding to each product for consumers to purchase,
said steering files being sent and executed on a network-connected client computer device (10) accessible to the consumer causing a request to be made to said second server for the key for the product identified in the steering file,
at the second server encrypting the relevant encryption key with a key unique to the consumer and downloading it to said client device,
decrypting the encryption key at said client device and storing it in memory (6),
generating a request to the first server from said client device to deliver the product identified in the steering file,
downloading the encrypted product from said first server to said client device,
retrieving the encryption key from said memory and using it to decrypt the product to a condition where it is ready for use.

3. A method according to claim 2, further including the step of verifying the allowability of the request to the second server for the key for the product identified in the steering file at the second server.

4. Computer software for carrying out the steps of the method of any of claims 1 to 3.

5. A computer software product comprising instructions which when carried out on a computer being sent and network causes the computer being sent and network to carry out the steps of the method of any one of claims 1 to 3.

6. A storage medium comprising instructions operable to cause a computer system to carry out the steps of the method of any of claims 1 to 3.

## Patentansprüche

1. Verfahren für die sichere Verteilung digitalisierter audiovisueller Erzeugnisse an Konsumenten über ein Datennetz, wobei das Verfahren die folgenden Schritte umfaßt:
Verschlüsseln der Erzeugnisse unter Verwendung eines unterschiedlichen Verschlüsselungsschlüssels für jedes Erzeugnis,
Speichern der verschlüsselten Erzeugnisse auf einem ersten Server (8),
Speichern der Verschlüsselungsschlüssel auf einem zweiten Server (3),
Verfügbarmachen eines dritten Servers (11), von dem Konsumenten Verschlüsselungsschlüssel erwerben können,
wobei der Konsument veranlaßt, daß eine Anforderung (12) nach dem Schlüssel für ein gewünschtes Erzeugnis von einer mit dem Netz verbundenen Clientcomputereinrichtung (10) an den dritten Server gestellt wird,
wobei der dritte Server die Anforderung an den zweiten Server weiterleitet,
auf dem zweiten Server Verifizieren der Zulässigkeit der Erfüllung der Anforderung, und wenn dies zutrifft, Verschlüsseln des relevanten Verschlüsselungsschlüssels mit einem für den Konsumenten einzigartigen Schlüssel und Herunterladen desselben auf den dritten Server,
wobei der dritte Server den Verschlüsselungsschlüssel auf die Clienteinrichtung herunterlädt,
Entschlüsseln des Verschlüsselungsschlüssels auf der Clienteinrichtung und Speichern des Schlüssels in dem Speicher (6),
Erzeugen einer Anforderung nach Auslieferung des gewünschten Erzeugnisses an den ersten Server von der Ctienteinrichtung,
Ausliefern des verschlüsselten Erzeugnisses von dem ersten Server an die Clienteinrichtung,
Abrufen des Verschlüsselungsschlüssels aus dem Speicher und Verwenden desselben zum Entschlüsseln des Erzeugnisses in einen Zustand, in dem es zum Abspielen unter Verwendung von geeigneter Abspielsoftware bereit ist.

2. Verfahren für die sichere Verteilung digitalisierter Produkte an Konsumenten über ein Datennetz, wobei das Verfahren die folgenden Schritte umfaßt:
Verschlüsseln der Produkte unter Verwendung eines unterschiedlichen Verschlüsselungsschlüssels für jedes Produkt,
Speichern des verschlüsselten Produkts auf einem ersten Server (8),
Speichern der Verschlüsselungsschlüssel auf einem zweiten Server (3),
Erzeugen von Steuerdateien (1), die zu jedem Produkt und dessen entsprechendem Schlüssel korrespondieren,
wobei die Steuerdateien Informationen enthalten, die das Produkt und den Ort des Verschlüsselungsschlüssels identifizieren,
Verfügbarmachen von Steuerdateien, die zu jedem Produkt korrespondieren, auf einem dritten Server (11) für den Bezug bzw. Erwerb durch Konsumenten,
wobei die Steuerdateien, die gesendet und auf einer mit dem Netz verbundenen, für den Konsumenten zugänglichen Clientcomputereinrichtung (10) ausgeführt werden, veranlassen, daß eine Anforderung nach dem Schlüssel für das in der Steuerdatei identifizierte Produkt an den zweiten Server gestellt wird,
auf dem zweiten Server Verschlüsseln des relevanten Verschlüsselungsschlüssels mit einem für den Konsumenten einzigartigen Schlüssel und Herunterladen desselben auf die Clienteinrichtung,
Entschlüsseln des Verschlüsselungsschlüssels auf der Clienteinrichtung und Speichern des Schlüssels in dem Speicher (6),
Erzeugen einer Anforderung nach Auslieferung des in der Steuerdatei identifizierten Produkts an den ersten Server von der Clienteinrichtung,
Herunterladen des verschlüsselten Produkts von dem ersten Server auf die Clienteinrichtung,
Abrufen des Verschlüsselungsschlüssels aus dem Speicher und Verwenden des Schlüssels zum Entschlüsseln des Produkts in einen gebrauchsbereiten Zustand.

3. Verfahren nach Anspruch 2, welches weiterhin den Schritt des Verifizierens der Zulässigkeit der Anforderung an den zweiten Server nach dem Schlüssel für das in der Steuerdatei identifizierte Produkt auf dem zweiten Server umfaßt.

4. Computersoftware für die Ausführung der Schritte des Verfahrens nach einem der Ansprüche 1 bis 3.

5. Computersoftwareprodukt, welches Befehle umfaßt, die, wenn sie auf einem Computernetzwerk ausgeführt werden, das Computemetzwerk dazu veranlassen, die Schritte des Verfahrens nach einem der Ansprüche 1 bis 3 auszuführen.

6. Speichermedium, welches Befehle umfaßt, die so betreibbar sind, daß sie ein Computersystem dazu veranlassen, die Schritte des Verfahrens nach einem der Ansprüche 1 bis 3 auszuführen.

## Revendications

1. Procédé de distribution sécurisée d'oeuvres audiovisuelles numérisées à des consommateurs, via un réseau de données, comprenant les étapes consistant à _{:}
chiffrer lesdites oeuvres en utilisant une clef de chiffrement différente pour chaque oeuvre ;
stocker les oeuvres chiffrées sur un premier serveur (8) ;
stocker les clefs de chiffrement sur un deuxième serveur (3) ;
mettre à disposition un troisième serveur (11) auprès duquel des consommateurs peuvent acheter des clefs de chiffrement ;
le consommateur commandant l'envoi d'une demande (12) entre un dispositif informatique client (10), connecté au réseau, et ledit troisième serveur, afin d'obtenir une clef pour une oeuvre souhaitée ;
le troisième serveur transférant ladite demande au deuxième serveur ;
vérifier sur ledit deuxième serveur la légitimité qu'il y a à satisfaire ladite demande et, dans ce cas, chiffrer la clef de chiffrement pertinente avec une clef unique au consommateur puis la télécharger vers ledit troisième serveur ;
ledit troisième serveur téléchargeant ladite clef de chiffrement vers ledit dispositif client ;
déchiffrer la clef de chiffrement sur ledit dispositif client et la sauvegarder en mémoire (6) ;
produire sur ledit dispositif client une demande de fourniture de l'oeuvre souhaitée, adressée au premier serveur ;
fournir l'oeuvre chiffrée entre ledit premier serveur et ledit dispositif client ;
lire la clef de chiffrement dans ladite mémoire et l'utiliser pour déchiffrer l'oeuvre en la mettant dans un état où elle est prête à être reproduite à l'aide d'un logiciel de lecture approprié.

2. Procédé de distribution sécurisée de produits numérisés à des consommateurs, via un réseau de données, comprenant les étapes consistant à _{:}
chiffrer lesdits produits en utilisant une clef de chiffrement différente pour chaque produit ;
stocker le produit chiffré sur un premier serveur (8) ;
stocker les clefs de chiffrement sur un deuxième serveur (3) ;
créer des fichiers de commande (1) correspondant à chaque produit et à sa clef correspondante ;
lesdits fichiers de commande contenant des informations identifiant le produit et la position de la clef de chiffrement ;
mettre à disposition sur un troisième serveur (11) des fichiers de commande correspondant à chaque produit, pour que les consommateurs les achètent ;
lesdits fichiers de commande étant envoyés et exécutés sur un dispositif informatique client (10), connecté au réseau, accessible au consommateur pour commander l'envoi d'une demande audit deuxième serveur pour obtenir la clef destinée au produit identifié dans le fichier de commande ;
sur le deuxième serveur, chiffrer la clef de chiffrement pertinente avec une clef unique au consommateur puis la télécharger vers ledit dispositif client ;
déchiffrer la clef de chiffrement sur ledit dispositif client et la sauvegarder en mémoire (6) ;
produire sur ledit dispositif client une demande adressée au premier serveur pour fournir le produit idenifié dans le fichier de commande ;
télécharger le produit chiffré entre ledit premier serveur et ledit dispositif client ;
lire la clef de chiffrement dans ladite mémoire et l'utiliser pour déchiffrer le produit en le mettant dans un état où il est prêt à être utilisé.

3. Procédé selon la revendication 2, comprenant en outre l'étape consistant à vérifier sur le deuxième serveur la légitimité de la demande adressée au deuxième serveur pour obtenir la clef du produit identifié dans le fichier de commande.

4. Logiciel d'ordinateur destiné à exécuter le procédé selon l'une quelconque des revendications 1 à 3.

5. Progiciel d'ordinateur comprenant des instructions qui, lorsqu'elles sont exécutées sur un réseau d'ordinateurs, commandent au réseau d'ordinateurs d'exécuter les étapes du procédé selon l'une quelconque des revendications 1 à 3.

6. Support de stockage comprenant des instructions en mesure de commander à un système informatique d'exécuter les étapes du procédé selon l'une quelconque des revendications 1 à 3.
